# EUROPEAN PATENT APPLICATION

(11) **EP 3 216 578 A1**
(43) Date of publication of application: **13.09.2017**
(21) Application number: 17159310.6
(22) Date of filing: 06.03.2017
(51) Int. Cl.: B29C 33/12, B29C 45/14, B29C 33/14

(54) **DEVICE AND METHOD FOR INJECTION MOLDING OF COMPOSITE MATERIALS COMPRISING AT LEAST ONE LAMINATE**

(30) Priority: 07.03.2016 CH 2912016
(71) Applicant: Georg Kaufmann Formenbau AG, 5453 Busslingen (CH)
(72) Inventor: Böhme, Philipp, 5620 Bremgarten (CH); Bopp, Joshua, 5608 Stetten (CH); Götze, Christian, 5210 Windisch (CH)
(74) Representative: Willy, Otto Martin

(57) **Abstract**

The present invention relates to a device for injection molding of a composite material comprising at least one laminate (1). The device comprises a mold (2) including a plurality of mold portions (3, 4), each heaving a first side (5, 6) defining a molding surface. At least one of the mold portions (3, 4) is movable relative to at least one other of the mold portions (3, 4). Such that the mold (2) is movable between an open state and a closed state in which the molding surfaces of the mold portions cooperate to define a mold cavity. One or more retaining arms with the gripper for contacting the laminate are also comprised in the device according to the present invention. Thereby, the retaining arm (7, 7', 8, 8') is arranged such that it is movable between a retracted position and an extended position.

The present invention further relates to an according method for injection molding of a composite material comprising at least one laminate.

## Description

### Technological field

The present invention relates to the field of devices for injection molding of a composite material comprising at least one laminate. The invention further relates to a method for injection molding of a composite material, all corresponding to the preambles of the independent claims.

### State of the art

Injection molding is a method of manufacturing items, in which a mold is used to impart an initially at least partially fluid material with a form or shape, whereby that form or shape is determined by the mold. A variety of complex shapes can be attained by injection molding. Furthermore, well established techniques of injection molding allow the manufacturing of forms and shapes out of composite material. This can encompass methods such as the layered injection of different materials into the mold, or the compartmentalisation of the mold and injection of the materials into the respective compartments. Injection molding can further produce composite materials by processing a variety of inlays in the mold. One particularly challenging type of injection molding the overmolding of a laminate with overmolding injection molding material. The challenge is due to the fact, that the injection process itself induces fluid dynamic forces that can have shearing effects on the laminates. In the end, this can result in a misplacement of the laminate in the resulting shape and the structural deficiencies of the letter. At the same time a fixation of the laminate inside the mold would insatiably cause spots where the overmolding would not perform in a way that the laminate is fully encapsulated.

Composite materials with laminates are useful in a variety of applications. The laminates can induce an increased stability to the product in a particular axis, while at the same time being comparatively light weight and even, if so required, be essentially stiff and equipped with a breaking point in another axis.

The document DE 10 2009 024 789 A1 (Reese, E.) describes such a process for manufacturing a form from fibre reinforced thermoplastic material by injection molding, whereby the fibre inlay is to be completely jacketed by the thermoplast. Therefore, a mold is proposed, comprising two mold portions which are equipped with fixating elements on both sides. These fixating elements are moveable towards each other. The process requires a complete closing of the mold to completely clamp and plastically deform the fibre inlay. After this closing, the fixating arms hold the fibre mesh into place as the overmolding occurs. The process is not suited for the processing of unidirectional fibres though, that do not require a pre-forming or pre-molding step.

It is thus a requirement in the art to have device and corresponding method for injection molding of a composite material with a laminate which alleviates the buckling of the laminate within the mold and at the same time ensures an encapsulation of the laminate as required by the structural demands of the resulting product.

### Disclosure of the invention

It is therefore an object of the present invention to provide a device for injection molding of composite material which overcomes at least one disadvantage of the state of the art. In particular, a device for injection molding of a composite material shall be provided which enables the manufacture of composite materials comprising at least one laminate that is easy to use and essentially decreases relative movement of the laminate within the mold caused by an injection flow of an overmold. It is a further particular object of the present invention to provide a corresponding method for injection molding of a composite material comprising at least one laminate that is easy to execute and alleviates the event of deformations and undesirable characteristics of the resulting part. At least one of these objects has been solved with a device and a method according to the characterising part of the independent claims of the present invention.

One aspect of the present invention relates to a device for injection molding of a composite material comprising at least one laminate. In the sense of the present invention a laminate can be understood as a material which can be by itself a composite of at least two further materials of which at least one is a material that extends in the longitudinal direction of the laminate. The laminate can, but need not be inlaid in another material. One particular form of the laminate according to the sense of the present invention is a laminate comprising reinforcing fibres that extend in a longitudinal direction of the laminate. Such fibres are usually embedded into a matrix of a suitable resin. In a particular embodiment of this particular type of laminate the fibre is chosen from the group comprising glass fibre, carbon fibre, ceramic fibre, mineral fibre, nylon fibre or natural fibre, such as for example hemp fibre. Among the matrix materials most often materials from the group of duroplasts, elastomers or thermoplasts are utilised.

For the prupose of the present invention, the laminate does not need to be encapsulated in a matrix. A laminate according to the present invention can consist of the fibres as bundle per se.

In the sense of the present invention a laminate can be further define as a fibre-reinforced composite with unidirectional continuers filament.

The device of the present invention comprises a mold including a plurality of mold portions. Each of the mold portions has a first side defining a molding surface. Further, at least one of the mold portion is moveable relative to at least one other of the mold portions, such that the mold is moveable between an open state and a closed state. In which the molding surfaces of the mold portion cooperate to define a mold cavity. The device further comprises one or more retaining arms with a gripper for contacting the laminate, and the retaining arm is arranged such that this moveable between a retracted position and an extended position.

In the sense of the present invention, the retaining arm is found to be in an extended position, when it is further form the molding surface of the respective mold portion then when in the retracted positions and extends into the mold cavity. Analogously the gripper is in the retracted position, when it is relatively closer to the surface of a respective mold portion than in the extended position.

In a particular embodiment, the gripper part of the retaining arm is flush with the surface of the respective mold portion the retaining arm is associated with when in the retracted position.

In a particular embodiment, the plurality of mold portions comprises at least one pair of mold portions which are essentially complementary to each other. In the sense of the present invention, the pair of mold portions is essentially complementary to each other, when both mold portions are arranged, such as to form a cavity when they interact with each other, respectively when the mold is in the closed state and the molding surfaces of both mold portions of the pair of mold portions define a cooperatively formed mold cavity. In a particular embodiment, a first mold portion is a core mold portion and a second mold portion is a cavity mold portion.

In a further particular embodiment, the molding surfaces are arranged such as to face each other when in open state.

In a particular embodiment of the present invention, the retaining arm(s) is slideably coupled to the respective mold portion. In a further particular embodiment the retaining arm(s) are arranged at either one of the mold portions, such that they extend through the mold surfaces into mold cavity, respectively into a distance between the mold portions prior to closing the mold.

In the sense of the present invention, a gripper shall encompass any means suitable for preventing the laminate from shifting or buckling from its position in the course of the injection molding. In particular, such a gripper shall not be construed as being limited to a device performing a gripping function by itself. In the most basic embodiment, the gripper according into the present invention is configured as a bracket which interacts with a second gripper bracket of a further retaining arm, such that the laminate is held in position.

In a further embodiment of the present invention, the gripper is configured as flat front edge with structures for increased friction with the laminate to be retained. In a particular embodiment, the flat front edge has channels for the flow of overmold during the overmold injection step.

In a particular embodiment, the gripper has an essentially oblong contact surface for contacting the laminate to be held. In a further embodiment, the long dimension of the essentially oblong contact surface of the gripper is chosen such as to have a dimension larger than the width of the laminate to be held.

In a particular embodiment, the gripper is configured with a ridged surface for contacting the laminate.

In a most basic embodiment, the gripper is arranged, such as to hold the laminate by contacting it and retaining it either with an opposing gripper, a plurality of opposing grippers or an opposite molding surface formed by a first side of a mold portion arranged opposite to said gripper.

In a further particular embodiment, the gripper is arranged such as to enable a gripping, clamping or pinching movement upon the laminate by contacting the laminate. In a particular embodiment the gripper is formed integrally and from one piece.

In a particular embodiment, the gripper, preferably the front end surface of the gripper adapted for contacting the laminate, is either one of serrated, ridged, chamfered or traversed with furrows. In a further preferred embodiment, the said serrations, chamfers or furrows are adapted to allow an overmold material to flow through during the injection molding procedure.
In a particular embodiment of the present invention, the retaining arm(s) includes at least one shaft that is coupled to the gripper and is slideably received by the respective mold portion. The respective mold portion can be equipped further guidance, such as to enable a linear movement of the retaining arm(s) from the retracted into the extended position. In a further particular embodiment, the retaining arm(s) include a plurality of shafts each one either ending in an individual gripper or collectively ending into one integral gripper.

In a particular embodiment, the gripper is integral with the at least one shaft. In an alternative embodiment, the gripper and the at least one shaft(s) are separate elements joined together to form a retaining arm.
In a particular embodiment, each gripper is held by at least two shafts that are slideably retractable into the respective mold portion. This enables a precise steering and therefore dosage of the retaining force of the gripper in respect to the laminate.

In a particular embodiment, the shafts of the retaining arm(s) are chosen in length to correspond to a first stroke of an actuator actuating the retaining arm(s) in question. In a particular embodiment, the shaft is telescopic, such as to accommodate at least a second stroke and whereby the sum of strokes is larger than the length of the drawn in telescopic shaft, but equal to the fully extended telescopic shaft.

In a particular embodiment, the respective mold portion defines a recess for a least one of the retaining(s) configured to receive at least a portion of the gripper when the retaining is in the retraced position.

In a further particular embodiment, the mold portion defines a recess for at least one of the retaining arm(s) at the molding surface, such that when the retaining arm is in the retracted position and outer surface of the gripper is substantially flush with a portion of the molding surface that borders the recess. With other words, during operation the front edge of the gripper can be said to form part of the molding surface of the form to be thus produced. In an alternative embodiment, though, the recess is formed in a way that part of the front edge of the gripper, i.e. parts of the gripper that contact the laminate, are completely retracted into a recess of the mold portion.

In a particular embodiment of the present invention, the retaining arms are arranged in pairs. Each retaining arm has an opposite retaining arm, such that the grippers of the pair of retaining arms are adapted at holding a laminate in place. In a particular embodiment, the grippers are arranged as complementary brackets that upon being brought into an extended position both engage a laminate located between the brackets in a way, that the laminate is held into place. Such engagement can, but need not encompass a clamping of the respective laminate.

In a particular embodiment, the pairs are configured such as to be symmetrical in respect to each other. In an alternative embodiment, the pairs are structurally different from each other. In a further particular embodiment, the pairs can have analogous strokes, moving towards each other. In an alternative embodiment, the strokes the pair of gripping arms have towards each other are different. In a further particular embodiment, a retaining arm can be paired with a plurality of retaining arms on the opposite side, each with an individual stroke towards that said first retaining arm.

In a particular embodiment the retaining arms with their respective grippers are arranged such as to provide shape to the form to be achieved. Opposite grippers can be arranged such as to interlock with each other in manner that a particular geometry is achieved in the desired form.

In a particular embodiment the device compromises at least two retaining arms, whereby a first retaining arm is movably coupled to a first mold portion and a second retaining arm is movably coupled to a second mold portion. They are movably coupled such that, when the mold is in a closed state, the gripper of the first retaining arm opposes to the gripper of the second retaining arm.

In a particular embodiment the gripper of at least one of the retaining arm(s) defines one or more channels extending through gripper and configured to receive overmolding material.

In a particular embodiment, the mold comprises at least one injection gate. In a further particular embodiment, the mold comprises a plurality of injection gates. In an even further particular embodiment, the injection gates are arranged on or at least near one of the mold portion. In the sense of the present invention, an injection gate is adapted at injecting an overmold material into the mold cavity once the mold is moved into a closed state. For that and, the mold need not be in a completely closed state. That means an injection can already take place when the mold is moving from the open state into a closed state. In a particular embodiment, an injection gate is formed by a recess that is formed by at least two mold portions being the closed position. This can be achieved by equipping the mold portion with respective furrows, that are complementary to each other and form a channel for low through of an overmold, once the mold parts are interlocked.

In a particular preferred embodiment of the present invention, the plurality of injection gates is arranged such, that each injection gate is distanced from another injection gate.

In a particular preferred embodiment, the injection gates are arranged, such as to be operated individually.

In a particular embodiment the retaining arms are individually activated. Preferably, they are actuated such that at least one retaining arm is capable of performing a multi-level stroke. In the sense of the present invention, a multi-level stroke can, but need not be a gradual multi-level stroke but can mean that the retaining is capable performing at least two successive strokes. In a preferred embodiment, the at least one drive is chosen from the group consisting of: hydraulic drive, pneumatic drive or electro-mechanical linear actuator. For the purposes of the present invention, a stroke can be defined as at least a linear motion of the thus actuated item which is essentially reversible. Accordingly for the particular embodiment described further above, a multi-level stroke can be defined as the capability of performing at least two, preferably a multitude of successive translational movements. For this purpose the retaining arms can be individually actuated by either a drive capable of performing such a multi-level stroke, or alternatively be actuated by a multitude of drives according to the number of strokes required for the retaining arm. In a device according the present invention, the different ways of actuating a retaining arm can be individual for each retaining arm. This means that retaining arms adapted at performing only one stroke can come paired or simply just appear in the same embodiment as with retaining arms capable of performing a multi-level stroke.

In a particular embodiment of the present invention, the retaining arms are actuated by at least one hydraulic drive, preferably by two hydraulic drives such that the retaining arm in question is capable of performing at least a two-level stroke.

It is thus provided a device with a variety of advantageous embodiments, that is capable of injection molding of a composite material comprising at least one laminate and essentially ensuring, that the laminate surface suffers as little shift during the overmolding as possible, while at the same time being highly customisable in regard to the geometry of the desired form and the placement of the laminate in the mold.

It is evident for a person skilled in the art, that all the above described embodiments can be realised in an execution of the present invention in any combination, as soon as they are not explicitly exclusive. It is further evident for the skill artisan, that many of the embodiments described above providing further advantageous implementations are by themselves facultative for the execution of the basic inventive concept of the present invention.

Another aspect of the present invention is a method for injection molding of a composite material comprising at least one laminate. That method comprises placing a laminate relative to a plurality of mold portions of a mold, where at least one of the mold portions is moveable relative to at least one other of the mold portions, such that the mold is movable between an open state and a closed state in which the molding surfaces of the mold portions cooperate to define a mold cavity. Further the method comprises the step of placing the laminate such that, when the mold is in the closed state, the laminate is at least partially disposed within the mold cavity. The method according the present invention comprises the further step of moving at least one gripper that is moveably coupled to the first side of a respective one of the mold portions into contact with the laminate by moving the gripper between a retracted position and an extended position in which the gripper is further from the molding surface of the respective mold portion than when in the retracted position. The method required further injecting the mold cavity with an overmolding material and moving the grippers from the extended position to the retracted position.

In a particularly embodiment of the present invention, the method requires further the providing of a device as described above.

In a further embodiment of the present method the step of moving the grippers from the extended position to the retracted position is a sequential movement and comprises in particular sequentially moving the grippers from the extended position to the retracted position.

In the sense of the present invention a skilled artisan can define a sequentially moving of the grippers as a movement that begins with one gripper, preferably one inside of the mold closed to an injection gate, and ends after a series of grippers have performed that retracting steps. The sequence need not be in the sequence of arrangement of the injection gates on the mold surfaces. For complex forms, which comprise a variety of cavities and chambers it might be beneficial to start the injection from to opposite sides, additionally from the middle of the mold and sequentially removing the grippers as the overmold reaches the place where the grippers contact the laminate.

In a particular embodiment the method comprises the step of moving the grippers from the extended to the retracted position as the overmold advances during the injection step. In a further particular embodiment, the injection of the overmold is synchronised with the moving of the grippers from the extended position to the retracted position. In a further particular embodiment of the present invention the latter step is also synchronized with closing movements of the mold portion. In an even further particular embodiment, the latter step is synchronized with the actuation of a further stroke of the respective retaining arm on which the gripper in question is affixed.

In an alternative embodiment, the grippers are not sequentially moved from the extended to the retracted position but synchronically.

In a particular embodiment of the matter according to the present invention, a further step is required that comprises applying tension to the laminate. Said tension can be applied by two neighbouring retaining arms, whose strokes can be arranged such as that they move on essentially parallel axes. In the sense of the present invention, an axis is essentially parallel to another one when the angle both axes enclose is not larger than 5 degrees. This deviation might be required to adjust particular geometries of the intended form and is tolerable for applying said tension.

The tension means, in the sense of the present invention, that a force is applied between two points along the laminate which acts in essentially opposed direction, so that the laminate is better adapted at resisting any sheering forces apply during the overmold injection.

In a particular embodiment, the tension in the laminate is applied by using gravity of the laiminate. The laminate is first retained in a first set of grippers and let loose on one side, where it is pulled downwards by gravity. Then a second set of retaining arms downstream from the first is extended to retain the hanging part of the laminate. It has been surprisingly found, that this amount of tension resulting from two sets of distanced retaining arms can suffice to significantly reduce shifting of the laminate due to forces from the fluid during the injection molding step. The mold need not be maintened in the same orientation once tension is such applied to the laminate, but can be turned, moved, or otherwise handled.

In a particular embodiment, the overmolding material comprises a thermoplastic material. Injection molding with a thermoplastic material, which essentially receives fluid properties once heat above a certain temperature is known in the art and can easily be adapted to the present invention by a skilled artisan. In an alternative to a purely thermoplastic injection molding, a chemical induced hardening might be used, where a multitude of materials is used that upon contact engage in a chemical reaction hardening the overmold into its final form.

In a further particular embodiment, the overmolding material comprises a plurality of fibres. In a particular example of this embodiment the plurality of fibres can consists of chopped glass fibres.

In a particular embodiment, the injection molding is synchronized with sequentially moving from the extended position to the retracted position of a series of retaining arms as the injected overmold reaches them.

In a further particular embodiment of the present invention, the method comprises moving the at least one gripper out of contact with the laminate to allow overmolding material to flow within the gripper and the laminate. In a preferred embodiment, this step is performed as the overmolding material flow reaches the said gripper. In a particularly preferred method according to the present invention the sequence of retracting the gripper is predetermined and chosen according to the geometry of the mold and the viscosity and fluid dynamics of the injected overmold. In a particular embodiment a steering control is used to perform the required synchronization of injection and retracting of the grippers.

With this method a method for injecting molding a composite material comprising a laminate is provided, which enables the handling of unidirectional fibre composites in various complex mold form. The problem of bulking and shifting and ultimately loss of quality in the resulting mold by sheering forces and material instability of the unidirectional fibres in one direction of force is thus alleviated. For a person of ordinary skill in the art, the above methods steps are evidentially adapted to be performed in any combination to achieve the solution of the present invention, as long as they are not mutually exclusive.

In the following, the present invention shall be illustrated by means of particular examples and schematical illustrations, without being restricted thereto though. For the sake of understanding analogous elements have been provided with same references number in the different schematical drawings.

The drawings show:
- Figure 1a: Schematically mold for a device according to the present invention;
- Figure 1b: The mold of figure 1a with the retaining arms in an extended position;
- Figure 1c: The mold of figure 1b with one retaining arm further extended by an additional stroke;
- Figure 1d: A closing step of the mold of Figure 1a;
- Figure 1e: A further closing step of the said mold;
- Figure 1f: The mold being closed the additional stroke still further extended;
- Figure 1g: The mold closed and ready for overmolding;
- Figure 1h: The closed mold with the overmold injected;
- Figure 2a - 2d: Variation of the overmolding of a laminate;
- Figure 3a: Alternative step-up for a mold of a device according to the present invention;
- Figure 3b: The same mold of figure 3a with the grippers engaged;
- Figure 3c: The same mold enclosed position and with the overmold injected;
- Figure 4a: Detail representation of a gripper in a particular embodiment;

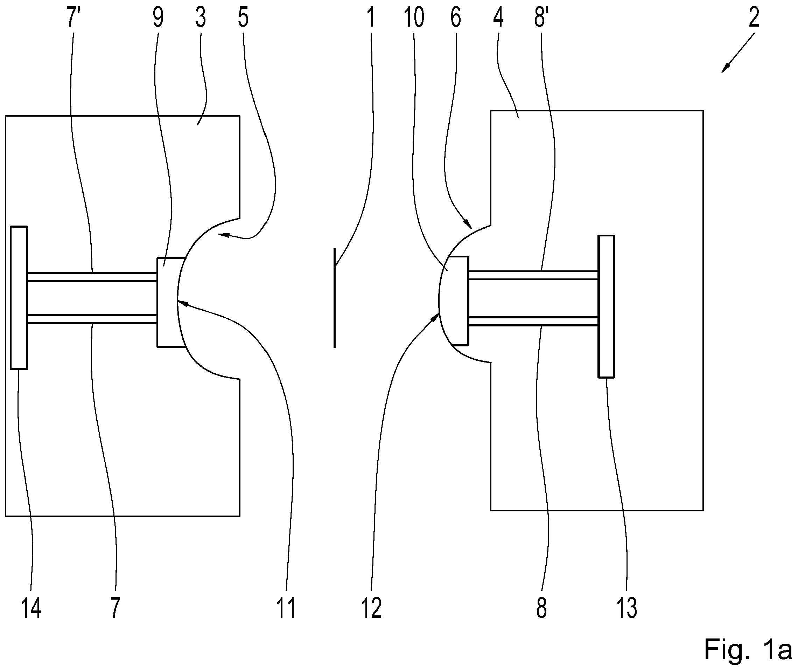

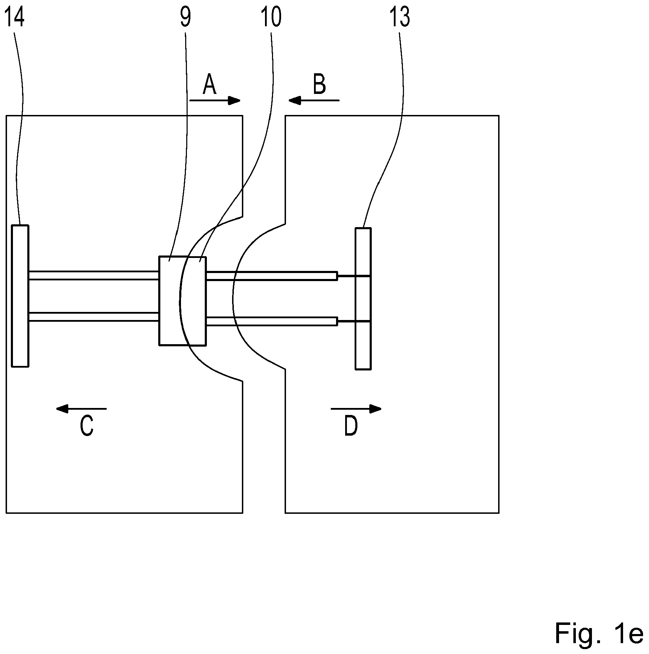

Figure 1a depicts a mold for a device according to the present invention in its most basic implementation. The mold 2 comprises a plurality of mold portions 3,4. This mold portions 3,4 may be fabricated out of a suitable material with standing the wear and temperatures in the injection-molding device, such as for examples steel, alloys or aluminum. Each mold portion 3,4 is arranged such that it faces the other mold portion 3,4. A first mold portion 3 is set up such as to form a cavity and has a first side 5 forming a molding surface. The second mold 4 is constructed such that it is essentially complementary to the first mold portion 3 and has also a first side 6 defining a molding surface which bulges essentially into cavity formed by the first side 5 of the first mold portion 3. The two mold portions 3,4 are movable relative to each other. This is most commonly achieved by a hydraulically machine, but also electric or mechanical ones are frequently used in the art. The mold portions 3,4 might comprise further injection gates (not shown) and might be equipped with further electronics, such as a preheating system, all depending on the nature of the composite material intended for production. In the present shown embodiment, the first mold portion is designed as the cavity mold portion 3 the second mold portion 4 is designed as a core mold portion 4. Further in the present embodiment, to each mold portion 3,4 a pair of retaining arms 7,7',8,8' is attributed ending each in a gripper 9,10 and each being actuated by a drive 14,13. For the sake of the present example, the retaining arms 7,7' of the cavity mold portion 3 are arranged in parallel and such that they end in a gripper 9 and adapted at moving the said gripper 9 into an extended position. The position picked in the figure 1a for both mold portions 3,4 is the retracted position. For this end, the retaining arms 7,7',8,8' might be fit in a suitable bearing (not explicitly shown) in the respective mold portion 3,4. Further it is evident from the figure of 1a, that the grippers 9,10 have their own surfaces 11,12, which form part of the mold surfaces defined by the first sides 5,6 of the mold portions 3,4. The cavity side surface 11 of the gripper 9 of the cavity mold portion 3 is concave and flush with the molding surface 5 of the cavity mold portion 3. Analogously, the core gripper surface 12 is convexly shaped and essentially follows the radius of the molding surface 6 of the core mold portion 4 and is essentially complementary to the cavity portion on the opposite side. The placement of the unidirectional fiber enriched compound 1 is shown for illustrative purposes in the middle between the two elements.

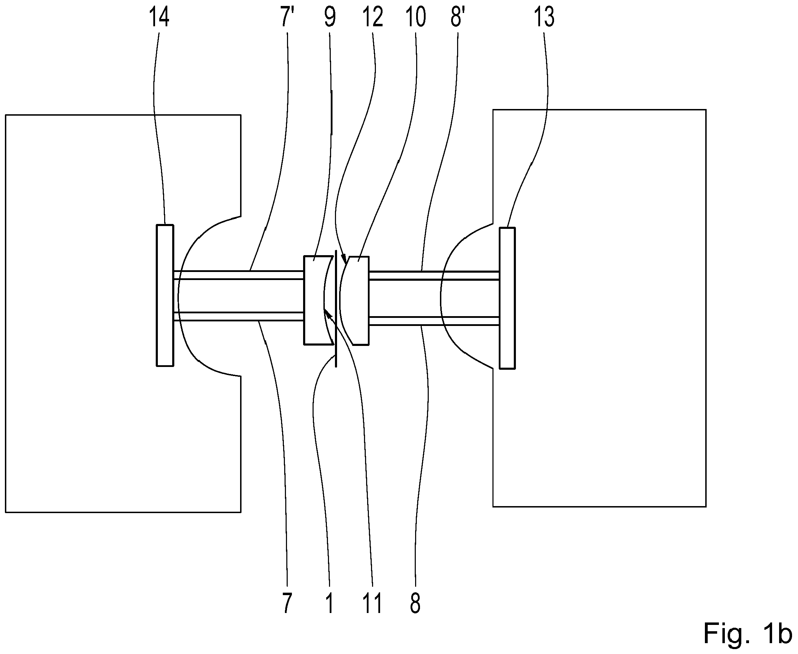

Figure 1b shows the same mold to where the retaining arms 7,7',8,8' are in the extended position and thereby the gripper surfaces 11,10 of the gripper 9,10 are making contact with the laminate 1. This movement has been achieved by a first stroke enabled by actautors 13,14 which maybe linear electromechanical, pneumatic or hydraulic actuators.

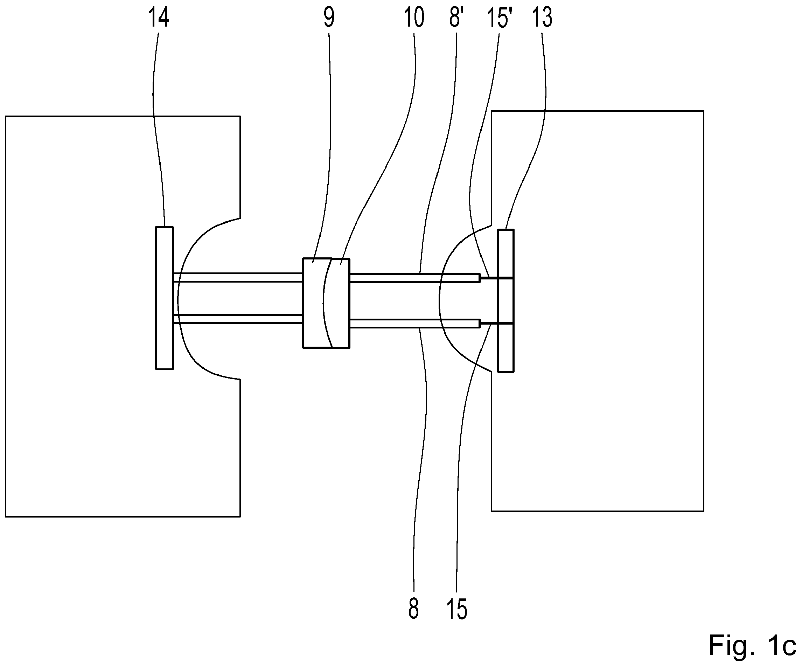

To establish full contact with the laminate in a particular embodiment of the present invention shown in figure 1c the actuator 13 of the core mold portion is adapted to apply a further second stroke 15,15'. This is shown only illustrative purposes as being on the core side, though it can equally well be arranged on the cavity side or on both sides. The grippers 9,10 now make contact with each other.

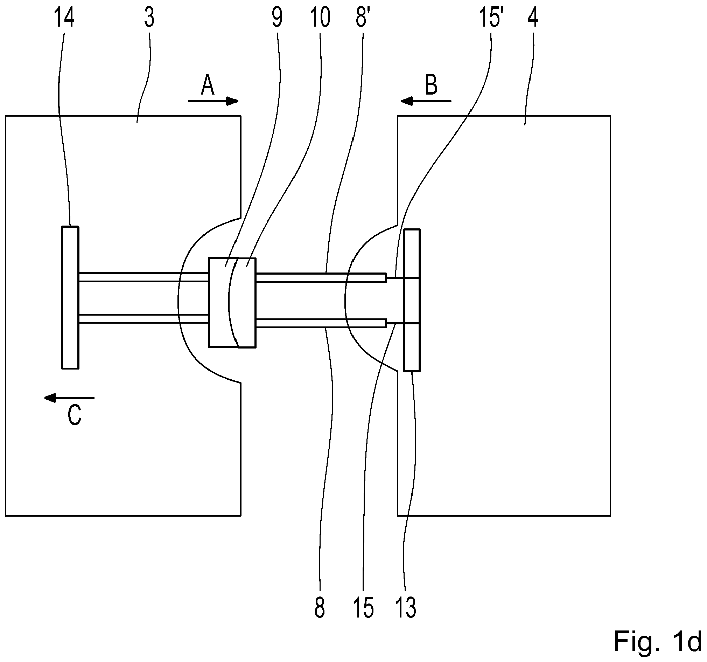

Figure 1d illustrates the process of the beginning closure of the mold by moving the mold portions 3,4 towards each other in a linear closing movement A, B. This movement is only shown for illustrative reasons as a linear movement of both the mold portions 3,4. Most commonly there is only one mold portion being moved towards the other. At the same time the retaining arm and the gripper 9 of the cavity mold portion 3 is being retracted by engagement of the cavity mold portion actuator 14. The stroke 15,15' and the extension 8,8' of the retaining arms 8,8' of the core mold portion 4 are still fully extended at this state.

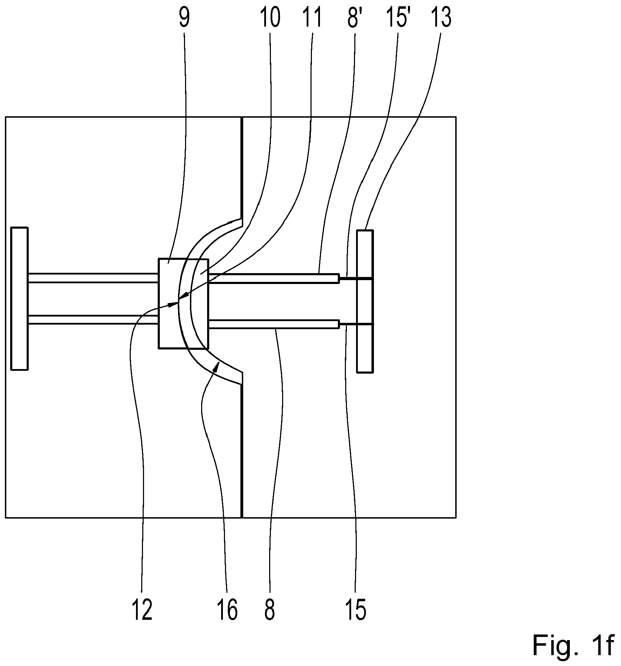

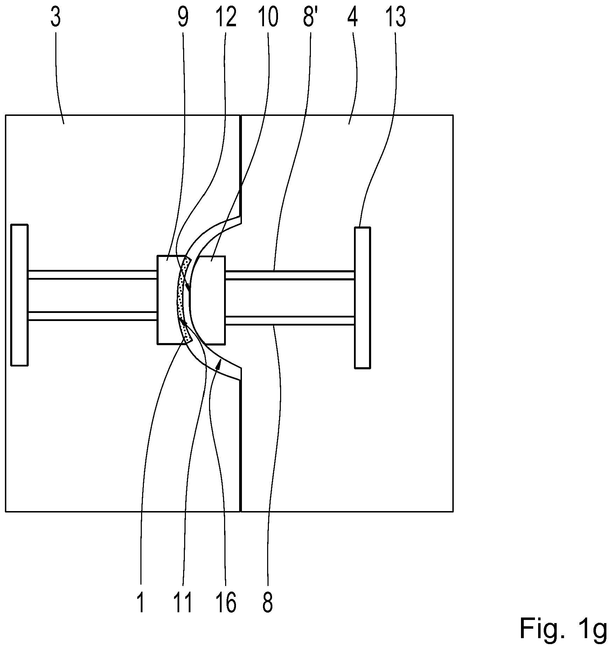

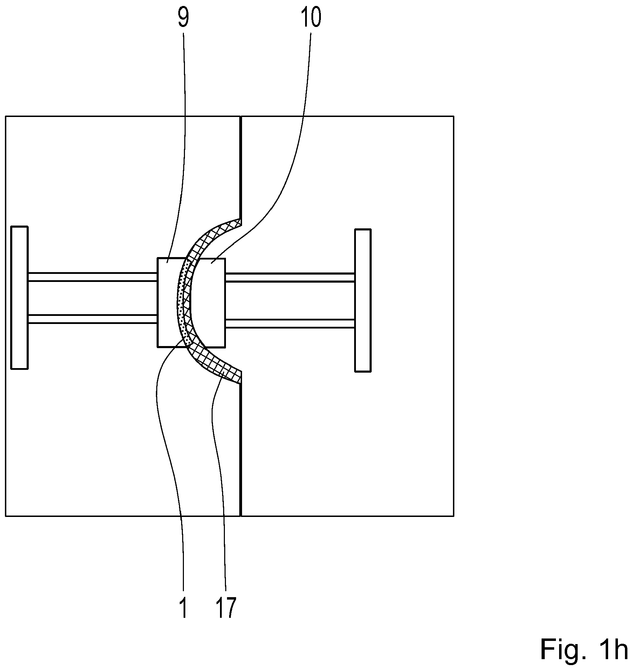

Figure 1b shows the retaining arms of the core mold portion 4 now equally being retracted into the retracted position, whereby the gripper 9, of the cavity mold portion 3 is already in its full retracted position and essentially flush with the molding surface of the mold portion cavity 3. This ends up in figure 1f, where the mold portion 3,4 are fully closed and the mold cavity 16 is thus defined, but the retaining arms 8,8' are still extended by the additional stroke 15, 15' and extend into mold cavity 16. The gripper surfaces 11,12 contact each other to retain the laminate in place. Figure 1g shows how the further stroke is removed the mold portions 3,4 still closed and the mold cavity 16 formed. This step can be the starting point of the injection of the overmold or it can already be performed synchronically with the injection of the overmold or it can already be performed synchronically with the injection of the overmold. The overmold injection is shown in figure 1h, where the laminate and the overmold 17 both fill the mold cavity.

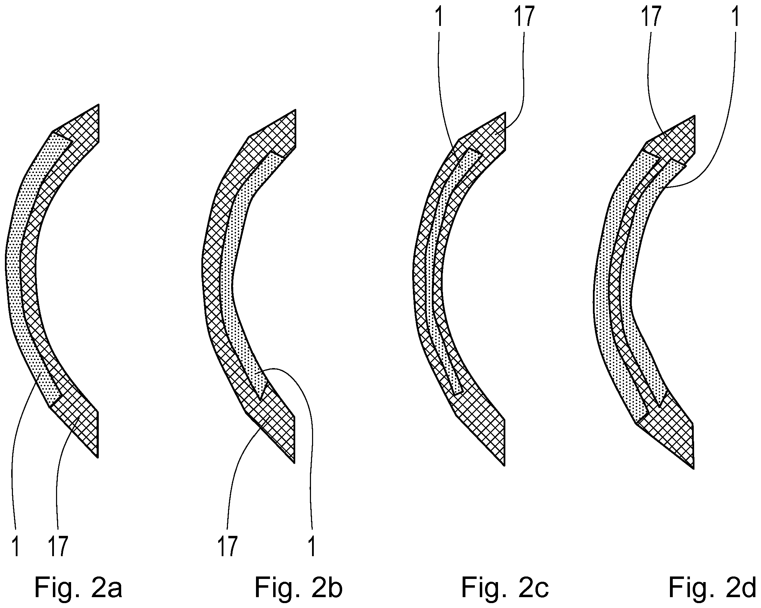

As it becomes easily evident to a person skilled in the art based on the description of figures 1a-1f, the mold portions, the geometry of the mold cavity and mold surfaces formed can be easily adapted to suit multitude of possible composite material forms. Further, the inclusion of either a further stroke on one or the other of a pair of retaining arms can further allow adaptions of the resulting position of the laminate in the composite material. This is shown exemplarily in figures 2a-2d, where the laminate 1 takes a different position inside the composite material and is either exposed at a side of the overmold 17, as shown in figures 2a or 2b or fully encapsulated in the overmold as shown in figure 2c. Figure 2d shows a particular embodiment, where a plurality of laminates is separated by a layer of overmold.

For the production of even more complex forms the mold 2 can be adapted with arrangements and the required retaining arms to suit such geometry.

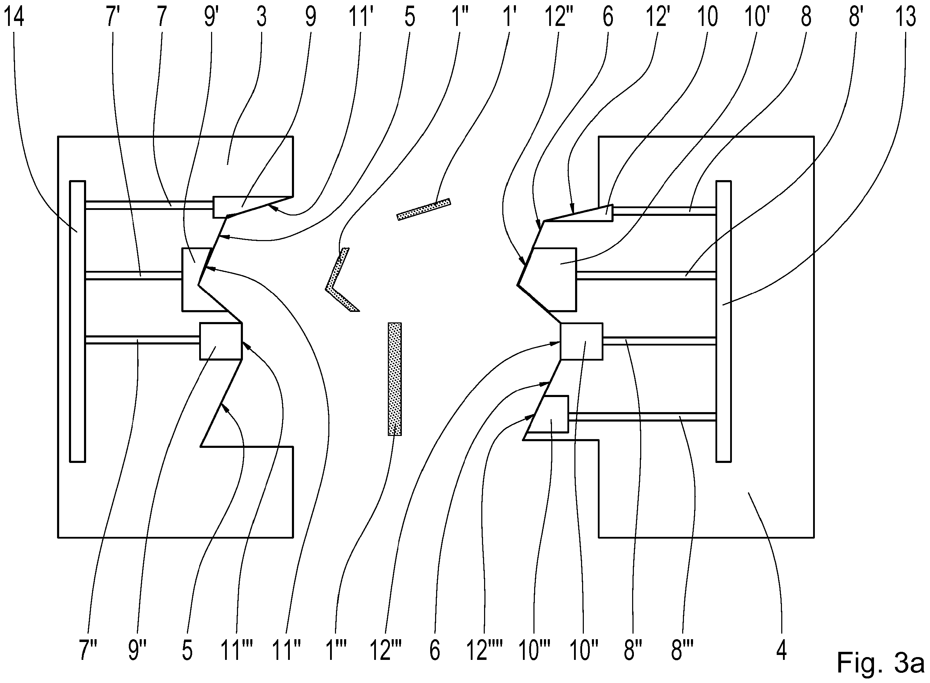

Figure 3a shows a particular embodiment where a composite material comprising a multitude of laminates 1', 1", 1"' is to be produced. The respective mold portion 3, 4 is comprised a multitude of retaining arms 7, 7', 7", 8, 8', 8", 8"'. The mold portion on the left is constructed as a cavity mold portion 3 and comes equipped with three retaining arms 7, 7', 7", 7"' each of them ending in a differently shaped gripper 9, 9', 9" with an alternative gripper surface 11', 11", 11"'. Still these gripper surfaces 11', 11", 11'" are made such as to be essentially flush with the mold surface 5 of the cavity mold portion 3. For the sake of simplicity, the retaining arms 7, 7', 7" are shown as being actuated by a single actuator 14. In fact, each of the different retaining arms 7, 7', 7" can be equipped with an individual actuator. Even further, each retaining arm 7, 7', 7" can be actuated by a multitude of actuators by itself, for instants than when a multiple stroke is wished or required.

The arrangement is analogous in the core mold portion 4. There four retaining arms 8, 8', 8" and 8'" each and in an individually shaped gripper 10, 10', 10", 10"' with each and building an individual gripper surface 12', 12", 12"', 12"". Analogously, each of the retaining arms 8, 8', 8", 8'" are shown as being actuated by a single actuator 13, which has already explained for the cavity mold portion 3 can be replaced by a multitude of actuators for each retaining arm.

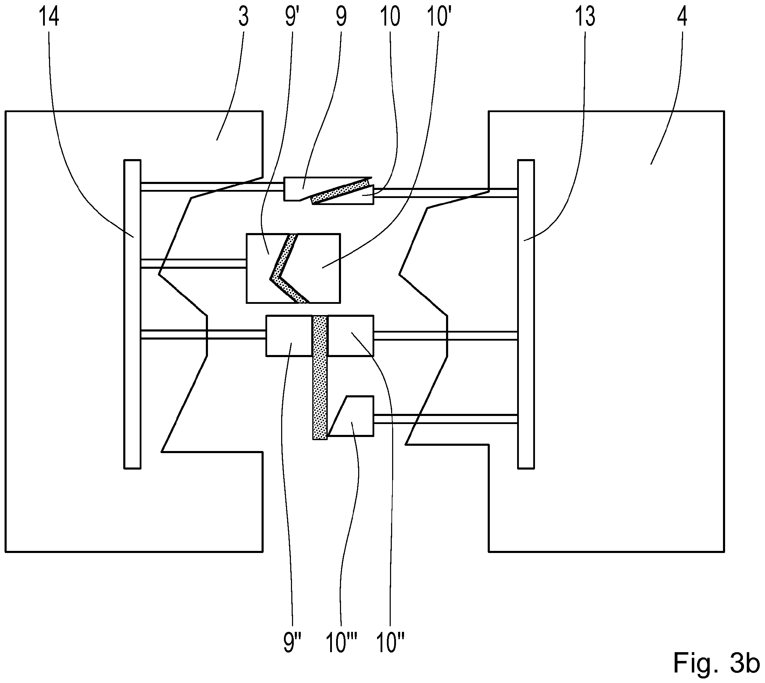

Figure 3b shows the retaining arms now being fully extended and contacting the laminate of the grippers 9, 9', 9", 10, 10', 10", 10"'. This has been achieved by extending the retaining arms by one stroke from the actuators 13, 14.

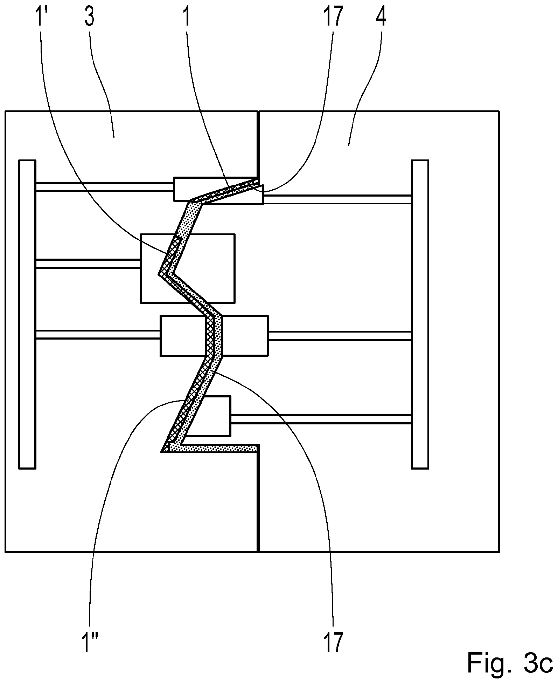

Figure 3c shows the fully closed mold and the retaining arms now for both mold portions 3, 4 being fully retracted. The mold cavity has been formed and the overmold 17 is injected such that the complex shape with partial laminate reinforcement has been produced.

The materials used in compass as a laminate a material that has one or more layers of material in itself. For instants a laminate can be unidirectional fibre either continues or uncontinuous that is joined together using a matrix material. Suitable matrix materials are epoxy, resin or other thermoplastic materials. The fibres can comprise layers of carbon fibres, glass fibres, basaltic fibres, fabric, textile, natural fibres or any combination of these types of fibres.

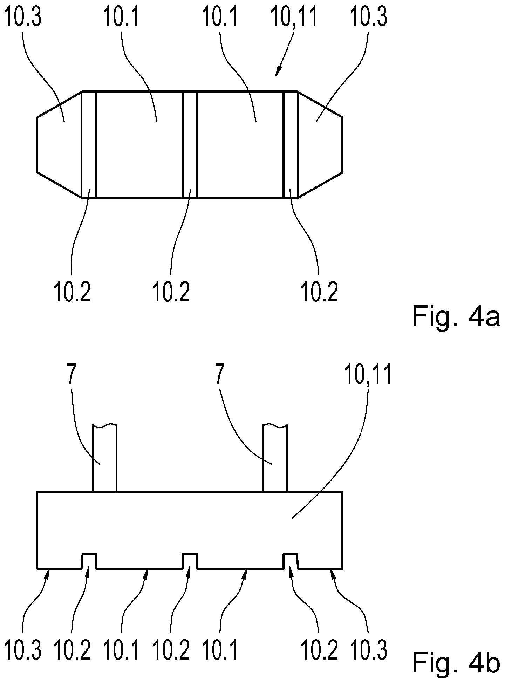

Further details of the grippers are shown in figures 4a and 4b. The gripper 10, 11 shown in figure 4a has a endsurface which is depicted in topview in figure 4a that is separated by canals 10.2. The gripper surfaces 10.1, 10.3 are formed by two different elements. The innermos gripper surfaces 10.1 are formed of essentially rectangular surfaces, where is the side surfaces 10.3 are in an essentially trapezoid form. The adapted geometry of the sides of the grippers can help in directing the overmold flow in the mold cavity. Further, the side surfaces 10.3 can come at an angle in respect to the inmost surfaces 10.1. The angle can be either positive or negative, depending on weather a clamping or an analogous counterpart to a clamp is to be formed by the gripper 10, 11.

The same embodiment of figure 4a is shown in figure 4b in a profile cut view. The gripper 10, 11 is attached to two retaining arms 7. And the innermost surface 10.1 are separated from each other by a canal 10.2 and further by further canals 10.2 from the end side surfaces 10.3.

The canals can further help at insuring a flow of overmold material during the injection molding. Further it can help with increasing the grip on the laminate.

For a person are skilled in the art it is perfectly evident, that all the shown particular embodiments and examples are in no way limiting to the scope of the present invention and you can easily adopt the general disclosure to the particular embodiments, such that further advantages embodiments maybe realised.

## Claims

1. A device for injection molding of a composite material comprising at least one laminate, the device comprising:
a) a mold including:
a plurality of mold portions, each having a first side defining a molding surface, and where at least one of the mold portions is movable relative to at least one other of the mold portions, such that the mold is movable between an open state and a closed state in which the molding surfaces of the mold portions cooperate to define a mold cavity;
b) one or more retaining arms with a gripper for contacting the laminate and whereby the retaining arm is arranged such that it is movable between a retracted position and an extended position.

2. The device of claim 1, where at least one of the retaining arm(s) is slidably coupled to the respective mold portion.

3. The device of any of claims 1 or 2, where at least one of the retaining arm(s) includes at least one shaft that is coupled to the gripper and is slidably received by the respective mold portion.

4. The device of any of claims 1-3, where, for at least one of the retaining arm(s), the molding surface of the respective mold portion defines a recess configured to receive at least a portion of the gripper when the retaining arm is in the retracted position.

5. The device of any of claims 1-4, where, for at least one of the retaining arm(s), the molding surface of the respective mold portion defines a recess configured to receive the gripper when the retaining arm is in the retracted position such that an outer surface of the gripper is substantially flush with a portion of the molding surface that borders the recess.

6. The device of any of claims 1-5, where the retaining arms are arranged in pairs, with each retaining arm having an opposite retaining arm, such that the grippers of the pair of retaining arms are adapted at holding a laminate in place.

7. The device of any of claims 1-6, comprising at least two retaining arms, whereby
a first retaining arm is movably coupled to a first mold portion, and
a second retaining arm is movably coupled to a second mold portion, such that when the mold is in the closed state, the gripper of the first retaining arm opposes the
gripper of the second retaining arm.

8. The device of any of claims 1-7, where the gripper of at least one of the retaining arm(s) defines one or more channels extending through the gripper and configured to receive overmolding material.

9. The device of any of claims 1-8, where the mold comprises at least one injection gate, in particular a plurality of injection gates, and further in particular at least one of the mold portions comprises an injection gate.

10. The device of any of claims 1 to 9, whereby the retaining arms are individually actuated, in particular are actuated such that at least one retaining arm is capable of performing a multi-level stroke, the retaining arms being actuated by at least one drive chosen from the group consisting of: hydraulic drive, pneumatic drive or electromechanical linear actuator.

11. The device of claim 10, whereby the retaining arms are actuated by at least one hydraulic drive, in particular by two hydraulic drives such that the retaining arms are capable of performing a two-level stroke.

12. A method for injection molding of a composite material comprising at least one laminate, comprising:
in particular, providing a device according to any of claims 1 to 11;
placing a laminate relative to a plurality of mold portion of a mold, where:
at least one of the mold portions is movable relative to at least one other of the mold portions such that the mold is movable between an open state and a closed state in which the molding surfaces of the mold portions cooperate to define a mold cavity; and
the placing the laminate is such that, when the mold is in the closed state, the laminate is at least partially disposed within the mold cavity; and
moving at least one gripper that is movably coupled to the first side of a respective one of the mold portions into contact with the laminate by moving the gripper between a retracted position and an extended position in which the gripper is further from the molding surface of the respective mold portion than when in the retracted position,
injecting the mold cavity with an overmolding material and moving the grippers from the extended position to the retracted position, in particular sequentially moving the grippers from the extended position to the retracted position.

13. The method of claim 12, comprising applying tension to the laminate inside the mold.

14. The method of any of claim 12 or 13, where the overmolding material comprises a thermoplastic material.

15. The method of any of claims 12-14, where the overmolding material comprises a plurality of fibers.

16. The method of any of claims 10-14, comprising moving the at least one gripper out of contact with the laminate to allow overmolding material to flow between the gripper and the laminate.

17. Use of a device according to claim 1 for the overmold injection molding of a strand of unidirectional fibre material, in particular a laminate comprising a strand of unidirectional fibre material.
